# EUROPEAN PATENT APPLICATION

(11) **EP 4 579 862 A1**
(43) Date of publication of application: **02.07.2025**
(21) Application number: 22969690.1
(22) Date of filing: 29.12.2022
(51) Int. Cl.: H01M 10/0587, H01M 10/0583

(54) **BATTERY CELL, BATTERY, AND ELECTRONIC DEVICE**

(71) Applicant: Contemporary Amperex Technology Co., Limited, Ningde, Fujian 352100 (CN)
(72) Inventor: ZHAO, Liya, Ningde, Fujian 352100 (CN); LI, Wei, Ningde, Fujian 352100 (CN); ZHANG, Shengwu, Ningde, Fujian 352100 (CN); LIU, Huihui, Ningde, Fujian 352100 (CN); LIN, Wenfa, Ningde, Fujian 352100 (CN); WU, Yongjiang, Ningde, Fujian 352100 (CN); QU, Fei, Ningde, Fujian 352100 (CN); YANG, Daoshuan, Ningde, Fujian 352100 (CN); HUANG, Binghong, Ningde, Fujian 352100 (CN); LIU, Ping, Ningde, Fujian 352100 (CN); ZHANG, Wenshuai, Ningde, Fujian 352100 (CN); WANG, Long, Ningde, Fujian 352100 (CN); LIU, Liangcheng, Ningde, Fujian 352100 (CN)
(74) Representative: Gong, Jinping
(86) International application number: PCT/CN2022/143462
(87) International publication number: WO 2024/138541

(57) **Abstract**

This application discloses a battery cell, a battery (1), and an electric apparatus. The battery cell includes at least one electrode assembly (10). The electrode assembly (10) includes a positive electrode plate (11), a negative electrode plate (12), a separator (13), and a porous insulation layer (14). The positive electrode plate (11), the separator (13), and the negative electrode plate (12) are stacked and wound. At least a portion of the porous insulation layer (14) is disposed in a bent region (16) of the electrode assembly (10), and the porous insulation layer (14) is disposed between the positive electrode plate (11) and the separator (13) or disposed between the negative electrode plate (12) and the separator (13). Based on the above structure, the service life of the battery cell can correspondingly be prolonged, and the safety of the battery cell can correspondingly be improved.

## Description

### TECHNICAL FIELD

This application relates to the field of battery technologies, and specifically to a battery cell, a battery, and an electric apparatus.

### BACKGROUND

At least one electrode assembly is typically provided in a battery cell. The electrode assembly may be processed into a roll-shaped structure by winding a positive electrode plate, a negative electrode plate, and a separator that separates the positive electrode plate from the negative electrode plate. The electrode assembly has a body region and bent regions disposed at ends of the body region. However, during the use of a battery cell, metal precipitation is likely to occur in the bent region of the electrode assembly, and as time goes on, dendrites are easily grown in the bent region. Dendrites are prone to causing internal short circuits in the battery cell, affecting the safety of the battery cell.

### TECHNICAL PROBLEMS

Embodiments of this application provide a battery cell, a battery, and an electric apparatus to solve the problem that dendrites are easily grown in a bent region of an electrode assembly of an existing battery cell, causing internal short circuits in the battery cell and affecting the safety of the battery cell.

### TECHNICAL SOLUTION

The following technical solutions are used in the embodiments of this application.

According to a first aspect, a battery cell is provided. The battery cell includes at least one electrode assembly, and the electrode assembly includes a positive electrode plate, a negative electrode plate, a separator, and a porous insulation layer, where
the positive electrode plate, the separator, and the negative electrode plate are stacked and wound; and
at least a portion of the porous insulation layer is disposed in a bent region of the electrode assembly, and the porous insulation layer is disposed between the positive electrode plate and the separator or disposed between the negative electrode plate and the separator.

In the battery cell provided in the embodiments of this application, the porous insulation layer is disposed between the bent portion of the positive electrode plate or the negative electrode plate at any circle and the separator. Based on this, the pores of the porous insulation layer can allow active ions to penetrate freely, so as to ensure that the porous insulation layer does not have great impact on the charging and discharging process of the battery cell, thereby ensuring the charging and discharging performance of the battery cell. On this basis, the porous insulation layer with insulation properties can also hinder the formation of dendrites. This effectively delays the occurrence of "dendrites directly causing an internal short circuit in the battery cell", and effectively delays the occurrence of "due to a short circuit, dendrites generating heat to melt the separator around the dendrites, and thus a part of the positive electrode plate and a part of the negative electrode plate at the melted part of the separator coming into direct contact to cause a short circuit", thereby correspondingly prolonging the service life of the battery cell, and correspondingly improving the safety of the battery cell.

In addition, in the battery cell provided in this application, during the winding and pre-pressing of the electrode assembly and during the use of the battery cell, the porous insulation layer disposed between the bent portion of the electro de plate and the separator can further buffer the bending stress borne by the bent part of the electrode plate. This can effectively reduce the risk of a decrease in the active material caused by tearing of the bent part of the electrode plate, and effectively reduce the risk of aggravation of metal precipitation at the bent region of the electrode assembly caused by the decrease in the active material, effectively lowering the growth speed of dendrites, thereby correspondingly prolonging the service life of the battery cell, and correspondingly improving the safety of the battery cell.

In some embodiments, in the bent region, at least one porous insulation layer is disposed on an inner side of the positive electrode plate at an innermost circle.

In the above solution, when "metal precipitation occurs at a bent part of the negative electrode plate at an innermost circle, and as time goes on, dendrites grow out from a defective part of a bent part of the separator", the porous insulation layer disposed on the inner side of the bent part of the positive electrode plate at the innermost circle can be used to insulate and block growing dendrites so as to prevent the dendrites from coming into direct contact with and conducting electricity to the positive electrode plate and the negative electrode plate. This can effectively delay the occurrence of "dendrites directly causing an internal short circuit in the battery cell" between the positive electrode plate at the innermost circle and the negative electrode plate at the innermost circle that are prone to metal precipitation, and effectively delay the occurrence of "due to a short circuit, dendrites generating heat to melt the separator around the dendrites, and thus a part of the positive electrode plate and a part of the negative electrode plate at the melted part of the separator coming into direct contact to cause a short circuit", thereby correspondingly prolonging the service life of the battery cell, and correspondingly improving the safety of the battery cell.

In addition, during the winding and pre-pressing of the electrode assembly and during the use of the battery cell, the porous insulation layer disposed on the inner side of the bent part of the positive electrode plate at the innermost circle can be used to buffer the squeezing stress borne by the bent part of the positive electrode plate at the innermost circle, so as to reduce the risk of tearing of the bent part of the positive electrode plate at the innermost circle leading to a decrease in the active material; and even can buffer the tensile stress borne by the bent part of the negative electrode plate at the innermost circle, so as to reduce the risk of tearing of the bent part of the negative electrode plate at the innermost circle leading to a decrease in the active material. Therefore, the risk of aggravation of metal precipitation caused by the decrease in the active material can be effectively reduced, and the growth speed of dendrites between the positive electrode plate at the innermost circle and the negative electrode plate at the innermost circle can be effectively reduced, correspondingly prolonging the service life of the battery cell, and correspondingly improving the safety of the battery cell.

In some embodiments, in the bent region, at least one porous insulation layer is disposed on an outer side of the positive electrode plate at an innermost circle.

In the above solution, during the winding and pre-pressing of the electrode assembly and during the use of the battery cell, the porous insulation layer disposed on the outer side of the bent part of the positive electrode plate at the innermost circle can be used to buffer the tensile stress borne by the bent part of the positive electrode plate at the innermost circle, so as to reduce the risk of tearing of the bent part of the positive electrode plate at the innermost circle leading to a decrease in the active material; and even can buffer the squeezing stress borne by the bent part of the negative electrode plate at the second innermost circle, so as to reduce the risk of tearing of the bent part of the negative electrode plate at the second innermost circle leading to a decrease in the active material. Therefore, the risk of aggravation of metal precipitation caused by the decrease in the active material can be effectively reduced, and the growth speed of dendrites between the positive electrode plate at the innermost circle and the negative electrode plate at the second innermost circle can be effectively reduced, correspondingly prolonging the service life of the battery cell, and correspondingly improving the safety of the battery cell.

In the above solution, during the use of the battery cell, the porous insulation layer disposed on the outer side of the bent part of the positive electrode plate at the innermost circle can be used to insulate and block dendrites growing towards the porous insulation layer so as to prevent the dendrites from coming into direct contact with and conducting electricity to the positive electrode plate at the innermost circle and the negative electrode plate at the second innermost circle. This can effectively delay the occurrence of "dendrites directly causing an internal short circuit in the battery cell" between the positive electrode plate at the innermost circle and the negative electrode plate at the second innermost circle, and effectively delay the occurrence of "due to a short circuit, dendrites generating heat to melt the separator around the dendrites, and thus a part of the positive electrode plate and a part of the negative electrode plate at the melted part of the separator coming into direct contact to cause a short circuit", thereby correspondingly prolonging the service life of the battery cell, and correspondingly improving the safety of the battery cell.

In the above solution, two porous insulation layers are provided in the bent region, one of the porous insulation layers is disposed on an inner side of the positive electrode plate at an innermost circle, and the other of the porous insulation layers is disposed on an outer side of the positive electrode plate at an innermost circle.

In the above solution, with the two porous insulation layers, the bent region can effectively delay the risk of short circuits between "the positive electrode plate at the innermost circle and the negative electrode plate at the innermost circle" and "the positive electrode plate at the innermost circle and the negative electrode plate at the second innermost circle" which are prone to metal precipitation and have relatively serious metal precipitation, and effectively alleviate the squeezing stress and tensile stress at the bent part of the positive electrode plate at the innermost circle that bears relatively great bending stress and is prone to tearing defects, so as to reduce the risk of bending tearing, thereby effectively prolonging the service life of the battery cell, and effectively improving the safety of the battery cell. In the above solution, the number of the porous insulation layers can also be reduced while the function of the porous insulation layer is maximized, thereby ensuring and increasing the energy density of the electrode assembly and the battery cell.

In some embodiments, the electrode assembly has a body region and bent regions disposed at ends of the body region; and
the porous insulation layer has a curved section curvedly disposed in the bent region, and an extension section connected to an end of the curved section and disposed in the body region.

In the above solution, the area for disposing the porous insulation layer can be correspondingly extended, and the porous insulation layer has a relatively wide tolerance range in terms of its preset position on the continuous positive electrode plate or the continuous negative electrode plate. This effectively ensures that when winding is performed to form the electrode assembly, the porous insulation layer can have the curved section clamped between the bent part of the electrode plate and the separator, and the extension section that can be adaptively extended to the body region according to the position tolerance, thereby effectively reducing the precision requirement for the preset position of the porous insulation layer on the continuous positive electrode plate or the continuous negative electrode plate, and effectively ensuring and improving the production yield rate of the electrode assembly.

In the above solution, the relative position and relative state of the porous insulation layer can further be reliably and stably maintained through the curved section clamped between the bent part of the electrode plate and the separator and the extension section clamped between the flat portion of the electrode plate and the separator, thereby effectively reducing the displacement risk of the porous insulation layer during the use of the battery cell, and effectively ensuring that the porous insulation layer can permanently, stably, and reliably function during the use of the battery cell.

In some embodiments, the porous insulation layer is adhered to the positive electrode plate or the negative electrode plate through a dissolvable adhesive.

In the above solution, before winding, the porous insulation layer can be adhered to a preset position of the continuous positive electrode plate or the continuous negative electrode plate through a dissolvable adhesive, so as to maintain the preset position and preset state with respect to the electrode plate. In this way, during winding to form the electrode assembly, it can be ensured that the porous insulation layer can be wound with the continuous positive electrode plate or the continuous negative electrode plate to the bent region, with a stable position and state with respect to the electrode plate. This can allow for convenient and quick installation of the porous insulation layer, effectively ensure and improve the position accuracy and utility of the porous insulation layer in the formed electrode assembly, and effectively ensure and improve the production efficiency and production yield rate of the electrode assembly.

In some embodiments, the battery cell includes an electrolyte for infiltrating the electrode assembly, and the electrolyte contains the dissolvable adhesive.

In the above solution, when the electrode assembly and the electrolyte are packed into the interior of the battery cell, at least a part of the dissolvable adhesive adhered between the electrode plate and the porous insulation layer is dissolved in the electrolyte to reduce or even eliminate blockage to a corresponding region of the electrode plate and the porous insulation layer. This makes it convenient for active ions to penetrate the porous insulation layer freely and normally, and makes it convenient for the active ions to be intercalated into the electrode plate freely and normally, thereby effectively ensuring that the disposition of the porous insulation layer does not have great impact on the charging and discharging process of the battery cell, and effectively ensuring the charging and discharging performance of the battery cell.

In some embodiments, the dissolvable adhesive is a modified acrylic pressure-sensitive adhesive, and the electrolyte contains modified acrylic resin.

In the above solution, the dissolvable adhesive can have the viscous liquid properties of the pressure-sensitive adhesive, so that the dissolvable adhesive can be applied on one side of the porous insulation layer along the thickness direction thereof, allowing for convenient, quick, and reliable formation. In addition, the dissolvable adhesive can have the elastic solid properties of the pressure-sensitive adhesive, so that the dissolvable adhesive can easily and reliably adhere the electrode plate with only a small pressure before winding, so that the porous insulation layer can be conveniently and quickly installed at a preset position of the continuous positive electrode plate or the continuous negative electrode plate. Furthermore, the dissolvable adhesive can have the easy degradation characteristics of the modified acrylic resin, so that the dissolvable adhesive can be quickly and easily dissolved in the electrolyte without leaving any residue when the electrode assembly and the electrolyte are packed into the interior of the battery cell.

In some embodiments, an absolute value of a difference between porosity of the porous insulation layer and porosity of the separator is less than or equal to 25%.

In the above solution, the porosity of the porous insulation layer can be made not much different from the porosity of the separator. This helps active ions to freely and normally penetrate the porous insulation layer and the separator, thereby effectively ensuring that the disposition of the porous insulation layer does not cause great impact on the charging and discharging process of the battery cell, and effectively ensuring the charging and discharging performance of the battery cell.

In some embodiments, an absolute value of a difference between porosity of the porous insulation layer and porosity of the separator is less than or equal to 10%.

In the above solution, the porosity of the porous insulation layer can be made close to the porosity of the separator. This helps active ions to freely and normally penetrate the porous insulation layer and the separator, thereby effectively ensuring that the disposition of the porous insulation layer does not cause great impact on the charging and discharging process of the battery cell, and effectively ensuring and improving the charging and discharging performance of the battery cell.

In some embodiments, the porous insulation layer is a polyolefin separator.

In the above solution, the porous insulation layer can be made by using the polyolefin separator such as a polypropylene separator, so as to ensure that the porosity of the porous insulation layer is similar to or even the same as the porosity of the separator. This can ensure that the active ions can freely and normally penetrate the porous insulation layer and the separator, thereby effectively ensuring that the disposition of the porous insulation layer does not cause great impact on the charging and discharging process of the battery cell, and effectively ensuring the charging and discharging performance of the battery cell.

In some embodiments, the porosity of the porous insulation layer is 40% to 50%.

In the above solution, a moderate air permeability of the porous insulation layer can be ensured, thereby ensuring that active ions can freely and normally penetrate the porous insulation layer. In addition, it can be ensured that a small amount of the adhesive penetrates into the pores of the porous insulation layer when the dissolvable adhesive is applied on a side of the porous insulation layer, while a large amount of the adhesive remains on the surface of the porous insulation layer. This can ensure the adhesion force of the dissolvable adhesive, thereby ensuring that the porous insulation layer can be reliably and temporarily fastened to the electrode plate through the dissolvable adhesive. Furthermore, it can be ensured that a small amount of the adhesive is left in the pores of the porous insulation layer when the dissolvable adhesive is dissolved in the electrolyte, thereby reducing the blocking effect of the dissolvable adhesive on the pores of the porous insulation layer, and ensuring that the active ions can freely and normally penetrate through the porous insulation layer. Therefore, the conductivity is ensured.

In some embodiments, pore sizes of pores of the porous insulation layer are A, and thickness of the porous insulation layer is B, where 24 ≤ B/A ≤ 400.

In the above solution, the thickness B of the porous insulation layer and the pore sizes A of the pores of the porous insulation layer can be both moderate. This ensures that the dendrites are not prone to pierce or pass through the porous insulation layer, thereby ensuring the blocking effect of the porous insulation layer on the dendrites. In addition, this ensures that active ions are easy to migrate in the porous insulation layer and the migration path is relatively short, thereby reducing the risk of precipitation caused by the difficulty in active ion migration. Thus, the service life of the battery cell can be effectively prolonged, and the safety of the battery cell can be effectively improved.

In some embodiments, the thickness B of the porous insulation layer is 12 µm to 20 µm.

In the above solution, the thickness B of the porous insulation layer can be ensured to be moderate, so as to reduce the impact of the porous insulation layer on the energy density of the battery cell and the penetration rate of active ions penetrating the porous insulation layer while the relatively good insulating and blocking effect of the porous insulation layer on the dendrites growing towards the porous insulation layer can be ensured. As a result, the conductivity can be ensured, the charging and discharging performance of the battery cell can be ensured, the service life of the battery cell can be correspondingly prolonged, and the safety of the battery cell can be correspondingly improved.

In some embodiments, the pore sizes A of the pores of the porous insulation layer are 0.05 micrometers (µm) to 0.5 µm.

In the above solution, a moderate air permeability of the porous insulation layer can be ensured, thereby ensuring that active ions can freely and normally penetrate the pores of the porous insulation layer. In addition, it can be ensured that a small amount of the adhesive penetrates into the pores of the porous insulation layer when the dissolvable adhesive is applied on a side of the porous insulation layer, while a large amount of the adhesive remains on the surface of the porous insulation layer. This can ensure the adhesion force of the dissolvable adhesive, thereby ensuring that the porous insulation layer can be reliably and temporarily fastened to the electrode plate through the dissolvable adhesive. Furthermore, it can be ensured that a small amount of the adhesive is left in the pores of the porous insulation layer when the dissolvable adhesive is dissolved in the electrolyte, thereby reducing the blocking effect of the dissolvable adhesive on the pores of the porous insulation layer, and ensuring that the active ions can freely and normally penetrate through the pores of the porous insulation layer. Therefore, the conductivity is ensured. In addition, during the use of the battery cell, this can ensure the blocking effect of the porous insulation layer on the dendrites growing from the defective part of the separator, and reduce the risk of dendrites growing from the pores of the porous insulation layer, thereby correspondingly prolonging the service life of the battery cell, and correspondingly improving the safety of the battery cell.

In some embodiments, tensile strength of the porous insulation layer in the width direction thereof is greater than or equal to 1000 kilograms-force per square centimeter (kgf/cm²).

In the above solution, it can be ensured that the porous insulation layer has sufficient tensile strength in its width direction, and the risk of the porous insulation layer breaking or cracking under the action of tensile force can be effectively reduced. Therefore, this can ensure and improve the insulating and blocking effect of the porous insulation layer on dendrites growing from the defective part of the separator, and effectively reduce the risk of the dendrites continuing to grow along a fracture or defective crack of the porous insulation layer, thereby correspondingly prolonging the service life of the battery cell, and correspondingly improving the safety of the battery cell.

In some embodiments, elongation of the porous insulation layer in a width direction thereof is greater than or equal to 10%.

In the above solution, it can be ensured that the porous insulation layer has a sufficient elongation in its width direction thereof, so as to ensure that the porous insulation layer can be adaptively elongated and deformed with the electro de assembly, thereby ensuring that the effective range of the porous insulation layer can cover the corresponding area of the electrode plate, and ensuring that the porous insulation layer can reliably insulate and block dendrites growing from a defective part of the separator.

In some embodiments, shrinkage of the porous insulation layer at 105 degrees Celsius (°C) is 0 to 3%.

In the above solution, during the use of the battery cell, it can be ensured that the porous insulation layer shrinks with the internal temperature of the battery cell to a relatively small extent, thereby ensuring that the effective range of the porous insulation layer can cover the corresponding area of the electrode plate, and ensuring that the porous insulation layer can reliably insulate and block dendrites growing from a defective part of the separator.

According to a second aspect, a battery is provided. The battery includes the battery cell provided in the embodiments of this application.

In the above solution, with the battery cell provided in the embodiments of this application used in the battery, the service life of the battery can be ensured and prolonged, and the use safety of the battery can be ensured and improved.

According to a third aspect, an electric apparatus is provided. The electric apparatus includes the battery or battery cell provided in the embodiments of this application.

In the above solution, with the battery or battery cell provided in the embodiments of this application used in the electric apparatus, the service life of the electric apparatus can be ensured and prolonged, and the use safety of the electric apparatus can be ensured and improved.

### BENEFICIAL EFFECTS

### BRIEF DESCRIPTION OF DRAWINGS

To describe the technical solutions in the embodiments of this application more clearly, the following briefly describes the accompanying drawings required for describing the embodiments of this application or example technologies. Apparently, the accompanying drawings in the following description show only some embodiments of this application, and persons of ordinary skill in the art may still derive other drawings from these accompanying drawings without creative efforts.
FIG. 1 is a schematic structural diagram of a vehicle according to an embodiment of this application;
FIG. 2 is a schematic exploded view of a battery according to an embodiment of this application;
FIG. 3 is a schematic exploded view of a battery cell according to an embodiment of this application;
FIG. 4 is a schematic cross-sectional view of a battery cell according to an embodiment of this application;
FIG. 5 is a schematic structural diagram of an electrode assembly according to an embodiment of this application;
FIG. 6 is a first partial schematic diagram of the electrode assembly shown in FIG. 5;
FIG. 7 is a second partial schematic diagram of the electrode assembly shown in FIG. 5; and
FIG. 8 is a schematic structural diagram of a positive electrode plate, a dissolvable adhesive, and a porous insulation layer according to an embodiment of this application.

Reference signs in the figures:
1. battery, 2. controller, 3. motor; 100. battery unit, 200. box, 201. first portion, 202. second portion;
10. electrode assembly, 11. positive electrode plate, 111. positive electrode tab, 112. positive electrode plate at innermost circle, 12. negative electrode plate, 121. negative electrode tab, 122. negative electrode plate at innermost circle, 123. negative electrode plate at second innermost circle, 13. separator, 14. porous insulation layer, 141. curved section, 142. extension section, 15. body region, 16. bent region; 17. dissolvable adhesive, 20. electrolyte; 30. housing, 40. end cover, and 50. electrode terminal.

### EMBODIMENTS OF THIS APPLICATION

To make the technical problem to be resolved, technical solutions, and beneficial effects of this application clearer and more comprehensible, the following describes this application in detail with reference to the accompanying drawings and embodiments. It should be understood that the specific embodiments described herein are merely used to explain this application but are not intended to limit this application.

In the descriptions of this application, it should be understood that the orientations or positional relationships indicated by the terms "length", "width", "upper", "lower", "front", "rear", "left", "right", "perpendicular", "horizontal", "top", "bottom", "inside", "outside", and the like are based on the orientations or positional relationships shown in the accompany ing drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include one or more features. In the description of this application, "a plurality of" means two or more unless otherwise specifically stated.

In the description of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

A battery cell is the smallest unit for storing and outputting electrical energy. At least one electrode assembly is typically provided in a battery cell. Electrode assemblies are components in which electrochemical reactions occur in battery cells. The electrode assembly may be processed into a roll-shaped structure by winding a positive electrode plate, a negative electrode plate, and a separator that separates the positive electrode plate from the negative electrode plate. The electrode assembly of a roll-shaped structure has a body region and bent regions disposed at ends of the body region. When the battery cell is being charg ed, the positive electrode plate generates active ions, and the active ions provided by the positive electrode plate can penetrate pores of the separator to move to the negative electrode plate and be intercalated into a negative electrode active material of the negative electrode plate. Conversely, when the battery cell is being discharged, the active ions intercalated in the negative electrode active material of the negative electrode plate are released, and the active ions released from the negative electrode plate can penetrate the pores of the separator to move to the positive electrode plate and be intercalated into a positive electrode active material of the positive electrode plate.

However, the applicant has found that:
1. In a bent region, since the positive electrode plate at any circle is located on the outer side of the negative electrode plate at the same circle, the curvature radius of the positive electrode plate at any circle is larger than the curvature radius of the negative electrode plate at the same circle. For example, since the positive electrode plate at the innermost circle is located on the outer side of the negative electrode plate at the innermost circle, the curvature radius of the positive electrode plate at the innermost circle is larger than the curvature radius of the negative electrode plate at the innermost circle. Based on this, in the bent region, the area of the positive electrode plate at any circle is larger than the area of the negative electrode plate at the same circle. As a result, during the charging of the battery cell, the positive electrode plate with a larger area and more positive electrode active materials generates more active ions, but the negative electrode plate with a smaller area and less negative electrode active materials does not have enough space for active ions to be intercalated into, resulting in the precipitation of active ions that cannot be intercalated into the negative electrode active material, and thus resulting in metal precipitation.
2. During the period of winding the positive electrode plate, the separator, and the negative electrode plate into a roll-shaped electrode assembly, since a bent part of the positive electrode plate and a bent part of the negative electrode plate (that is, the parts of the electrode plates corresponding to the bent region) bend and flex, and the curvature radius decreases toward the direction to the innermost circle, the positive electrode active material of the bent part of the positive electrode plate partially falls off (that is, powder fall-off), and the negative electrode active material of the bent part of the negative electrode plate also experiences powder fall-off. Moreover, since the curvature radius of the negative electrode plate at any circle is smaller than the curvature radius of the positive electrode plate at the same circle, powder fall-off at the bent part of the negative electrode plate is more serious during bending. Powder fall-off reduces the content of the active material on the electrode plate, and as a result, during the charging of the battery cell, the negative electrode plate with reduced negative electrode active material has fewer positions for active ions to intercalate into, thereby resulting in an increase in the number of active ions that cannot intercalate into the negative electrode active material, and thus aggravation of metal precipitation.
3. During the winding and pre-pressing of the electrode assembly and during the use of the battery cell, the bent parts of the positive electrode plate and the negative electrode plate bear a large force due to bending, and the curvature radius decreases and an experienced force increases toward the direction to the innermost circle. Consequently, the bent parts of the positive electrode plate and the negative electrode plate may be torn. If tearing occurs, the active material at a tearing point falls off. As a result, during the charging and discharging of the battery cell, more active ions that cannot intercalate into the active material are precipitated, aggravating metal precipitation.

Based on this, the applicant has found that during the use of the battery cell, the bent region of the electrode assembly is prone to metal precipitation. A continuous separator may also have defects such as large pores and breakage in local regions. Consequently, as the use time of the battery cell increases, at a defective part of the separator in the bent region, dendrites are prone to grow out of active ions precipitated. As the dendrites grow, the dendrites are prone to come into contact with and conduct electricity to the positive electrode plate and the negative electrode plate, causing an internal short circuit in the battery cell, affecting the safety of the battery cell. During the short circuit, the dendrites also generate heat to melt a part of the separator around the dendrites. As a result, the defect of the separator expands, and a part of the positive electrode plate and a part of the negative electrode plate at the melted part of the separator come into direct contact to cause a short circuit, thereby aggravating short circuits, and seriously affecting the safety of the battery cell.

Therefore, some embodiments of this application provide a battery cell. In the battery cell, a porous insulation layer is disposed between a bent part of a positive electrode plate or negative electrode plate at any circle and a separator. This is to ensure that on a basis of the porous insulation layer causing no great impact on the charging and discharging process of the battery cell, the porous insulation layer with insulation properties hinders the formation of dendrites, thereby effectively delaying the occurrence of "dendrites directly causing an internal short circuit in the battery cell", and effectively delaying the occurrence of "due to a short circuit, dendrites generating heat to melt the separator around the dendrites, and thus a part of the positive electrode plate and a part of the negative electrode plate at the melted part of the separator coming into direct contact to cause a short circuit". As a result, the service life of the battery cell can be correspondingly prolonged, and the safety of the battery cell can be correspondingly improved. In addition, during both the winding and pre-pressing of the electrode assembly and the use of the battery cell, the porous insulation layer of the battery cell can further buffer the bending stress borne by the bent part of the electrode plate. This can effectively reduce the risk of a decrease in the active material caused by tearing of the bent part of the electrode plate, and effectively reduce the risk of aggravation of metal precipitation at the bent region of the electrode assembly caused by the decrease in the active material, effectively lowering the growth speed of dendrites, thereby correspondingly prolonging the service life of the battery cell, and correspondingly improving the safety of the battery cell.

The battery cell disclosed in the embodiments of this application can be used alone, or can be combined with other battery cells to form a modular battery capable of providing higher voltage and capacity, such as a battery module, a battery group, or a battery pack. The battery cell and battery disclosed in the embodiments of this application can be used in electric apparatuses that use battery cells and batteries as power sources, or in various energy storage systems using battery cells and batteries as energy storage components. The electric apparatus may be but is not limited to vehicles, mobile phones, portable devices, notebook computers, ships, spacecrafts, electric toys, electric tools, or the like. The vehicles may be fossil fuel vehicles, natural-gas vehicles, or new energy vehicles. The new energy vehicles may be battery electric vehicles, hybrid electric vehicles, range-extended electric vehicles, or the like. The spacecrafts may include airplanes, rockets, space shuttles, spaceships, and the like. The electric toys include fixed or mobile electric toys, for example, game consoles, electric toy cars, electric toy ships, and electric toy airplanes. The electric tools include electric metal cutting tools, electric grinding tools, electric assembly tools, and electric railway-specific tools, for example, electric drills, electric grinders, electric wrenches, electric screwdrivers, electric hammers, electric impact drills, concrete vibrators, and electric planers.

To illustrate the technical solutions provided in this application, detailed description is given below with reference to the specific accompanying drawings and embodiments, and "the electric apparatus is a vehicle" is used as an example.

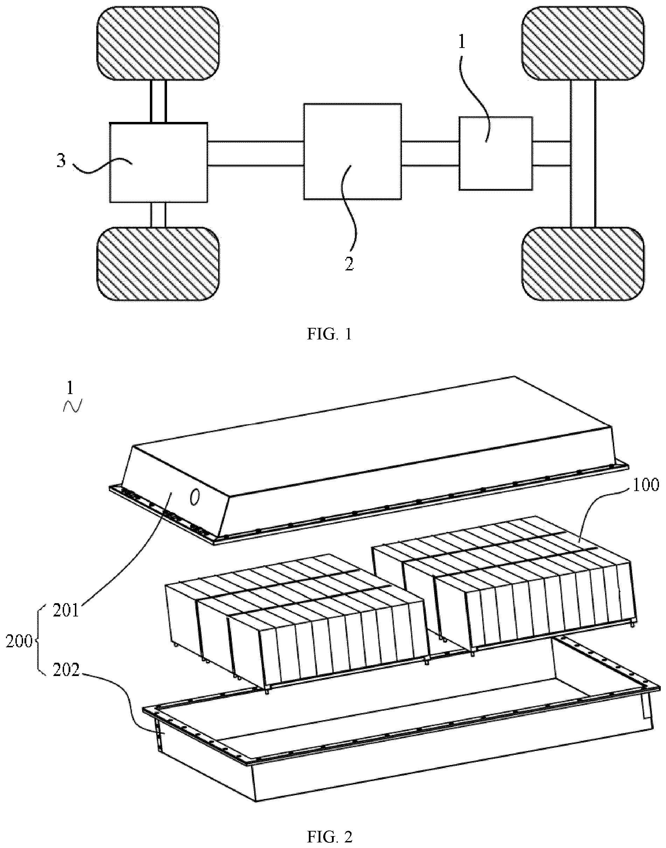

Referring to FIG. 1, FIG. 1 is a schematic structural diagram of a vehicle according to some embodiments of this application. The vehicles may be fossil fuel vehicles, natural-gas vehicles, or new energy vehicles. The new energy vehicles may be battery electric vehicles, hybrid electric vehicles, range-extended electric vehicles, or the like. The vehicle is provided with a battery 1 inside, where the battery 1 may be disposed at the bottom, front or rear of the vehicle. The battery 1 is configured to supply power to the vehicle. For example, the battery 1 may be used as an operational power source for the vehicle. The vehicle may further include a controller 2 and a motor 3, where the controller 2 is configured to control the battery 1 to supply power to the motor 3, for example, to satisfy power needs of start, navigation, and driving of the vehicle.

In some embodiments of this application, the battery 1 can be used as not only the operational power source for the vehicle but also a driving power source for the vehicle, replacing all or part of the fossil fuel or the natural gas to provide driving power for the vehicle.

Referring to FIG. 2, FIG. 2 is a schematic exploded view of a battery 1 according to some embodiments of this application. The battery 1 includes a battery unit 100 and a box 200, where the battery unit 100 is accommodated in the box 200. The box 200 is configured to provide an accommodating space for the battery unit 100. The box 200 may be a variety of structures. In some embodiments, the box 200 may include a first portion 201 and a second portion 202. The first portion 201 and the second portion 202 fit together so that the first portion 201 and the second portion 202 jointly define an accommodating space for accommodating the battery unit 100. The second portion 202 may be a hollow structure with one end open, and the first portion 201 may be a plate structure, where the first portion 201 covers the open side of the second portion 202 for the first portion 201 and the second portion 202 to jointly define an accommodating space. Alternatively, the first portion 201 and the second portion 202 may both be hollow structures with one side open, where the open side of the first portion 201 is engaged with the open side of the second portion 202. Certainly, the box 200 formed by the first portion 201 and the second portion 202 may have a variety of shapes, for example, cylinder or cuboid.

In the battery 1, the battery units 100 are provided in plurality, and the plurality of battery units 100 may be connected in series, parallel, or series-parallel, where being connected in series-parallel means a combination of series and parallel connections of the plurality of battery units 100.

Specifically, the battery unit 100 may be a battery cell. The plurality of battery cells may be directly connected in series, parallel, or series-parallel, and then an entirety of the plurality of battery cells is accommodated in the box 200. The battery cell may be a lithium-ion secondary battery, a lithium-ion primary battery, a lithium-sulfur battery, a sodium-lithium ion battery, a sodium-ion battery, or a magnesium-ion battery, or the like. The battery cell may be in a shape of a cylinder, a flat body, a cuboid, or other shapes. The battery cell may be packaged in different manners to form a cylindrical battery cell, a prismatic battery cell, a pouch battery cell, or the like. None of these is limited in this application.

Alternatively, the battery unit 100 may be a battery module or a battery group. A plurality of battery cells can be first connected in series, parallel or series-parallel to form a modular structure, namely a battery module or a battery group; and then a plurality of battery modules or battery groups are connected in series, parallel or series-parallel to form an entirety which is accommodated in the box 200.

Certainly, the battery 1 may further include other structures. For example, the battery 1 may further include a busbar (not shown in the figure) configured to implement electrical connection between the plurality of battery units 100.

Certainly, in some embodiments, the battery 1 may not include the box 200. Instead, a plurality of battery cells are electrically connected, and are made into an entirety through a necessary fixing structure, and then the entirety is placed into an electric apparatus.

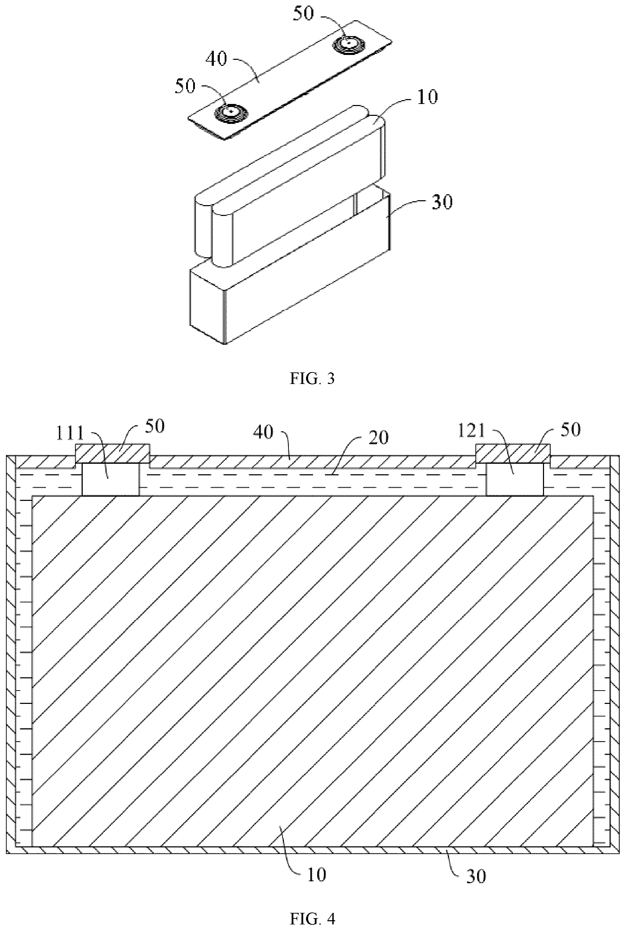

Referring to FIGs. 3 and 4, FIGs. 3 and 4 are schematic structural diagrams of battery cells according to some embodiments of this application. A battery cell is the smallest unit for storing and outputting electrical energy. The battery cell includes components such as an electrode assembly 10, an electrolyte 20, a housing 30, and an end cover 40.

The end cover 40 refers to a component that covers an opening of the housing 30 to isolate an internal environment of the battery cell from an external environment thereof. In some embodiments, a shape of the end cover 40 may be adapted to a shape of the housing 30 to fit the housing 30. In some embodiments, the end cover 40 may be made of a material with given hardness and strength, so that the end cover 40 is less likely to deform when subjected to squeezing and collision, allowing the battery cell to have higher structural strength and enhanced safety performance. Certainly, this embodiment does not limit the material of the end cover 40 to a sole type, and the end cover 40 may be made of materials such as copper, iron, aluminum, stainless steel, aluminum alloy, or plastic. In some embodiments, functional components such as an electrode terminal 50 may be provided on the end cover 40. The electrode terminal 50 may be configured to be electrically connected to the electrode assembly 10 for outputting or inputting electrical energy. In some embodiments, the end cover 40 may further be provided with a pressure relief mechanism (not shown in the figure) configured to relieve internal pressure when the internal pressure or temperature in the battery cell reaches a threshold. In some embodiments, an insulator (not shown in the figure) may further be provided on an inner side of the end cover 40. The insulator may be configured to isolate an electrically connected component in the housing 30 from the end cover 40 to reduce a risk of short circuits. Optionally, the insulator may be made of plastic, rubber, or the like.

The housing 30 is a component configured to form the internal environment of the battery cell together with the end cover 40. The internal environment formed by the housing 30 and the end cover 40 can be used to accommodate components such as the electrode assembly 10 and the electrolyte 20. In some embodiments, the housing 30 and the end cover 40 may be independent components, an opening may be provided in the housing 30, and the end cover 40 covers the opening to form the internal environment of the battery cell. In some embodiments, the end cover 40 and the housing 30 may also be integrated. Specifically, the end cover 40 and the housing 30 may form a shared connection surface before other components are disposed inside the housing, and then the housing 30 is covered with the end cover 40 when inside of the housing 30 needs to be enclosed. The housing 30 may be of various shapes and sizes, such as a cuboid, a cylinder, and a hexagonal prism. Specifically, a shape of the housing 30 may be determined according to a specific shape and size of the electrode assembly 10. The housing 30 may be made of various materials, such as copper, iron, aluminum, stainless steel, aluminum alloy, and plastic, and is not limited to a sole type in the embo diments of this application.

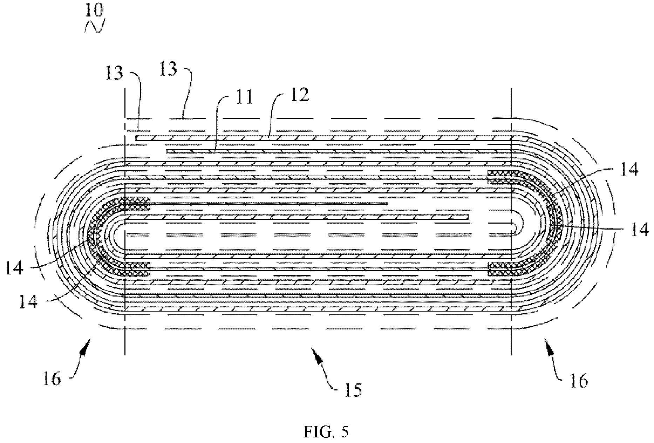

The electrode assembly 10 is a component in which electrochemical reactions occur in the battery cell. The housing 30 may include one or more electrode assemblies 10. Refer to FIG. 5. The electrode assembly 10 includes a positive electrode plate 11, a negative electrode plate 12, and a separator 13. The separator 13 separates the positive electrode plate 11 from the negative electrode plate 12. The positive electrode plate 11, the negative electrode plate 12, and the separator 13 that separates the positive electrode plate 11 from the negative electrode plate 12 may be processed into a roll-shaped structure in a winding method. The electrode assembly 10 of a roll-shaped structure has a body region 15 and bent regions 16 disposed at ends of the body region 15. A part of the positive electrode plate 11 and a part of the negative electrode plate 12 that do not have an active material form tabs respectively. The tab is a current transmission terminal of the electrode assembly 10, and is used to connect to an electrode terminal 50 to transmit current. The tab of the positive electrode plate 11 is a positive electrode tab 111, and the tab of the negative electrode plate 12 is a negative electrode tab 121. The positive electrode tab 111 and the negative electrode tab 121 may be located on the same side of the body region 15 or opposite sides of the body region 15, respectively.

The electrolyte 20 is a liquid that infiltrates the electrode assembly 10. When the battery cell is being charged, the positive electrode plate 11 generates active ions, and the active ions provided by the positive electrode plate 11 can penetrate the pores of the separator 13 to move to the negative electrode plate 12 through the electrolyte 20 and be intercalated into the negative electrode active material of the negative electrode plate 12. Conversely, when the battery cell is being discharged, the active ions intercalated into the negative electrode active material of the negative electrode plate 12 are released, and the active ions released from the negative electrode plate 12 can penetrate the pores of the separator 13 to move to the positive electrode plate 11 through the electrolyte 20 and be intercalated into the positive electrode active material of the positive electrode plate 11.

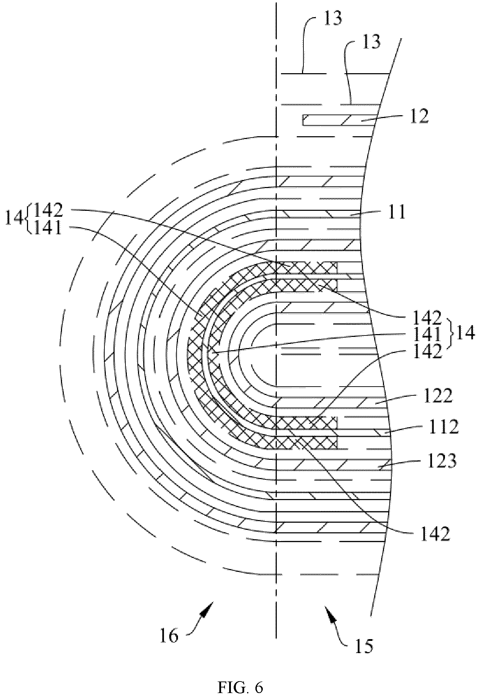

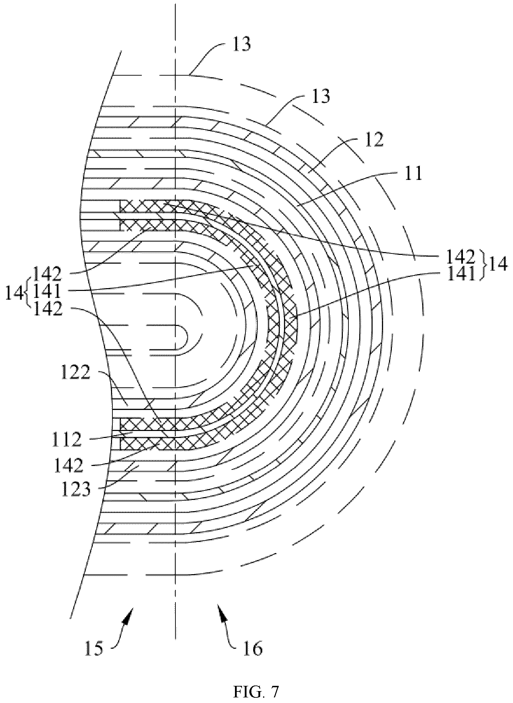

Referring to FIGs. 4, 5, 6, and 7, some embodiments of this application provide a battery cell. The battery cell includes at least one electrode assembly 10. The electrode assembly 10 includes a positive electrode plate 11, a negative electrode plate 12, a separator 13, and a porous insulation layer 14. The positive electrode plate 11, the separator 13, and the negative electrode plate 12 are stacked and wound. At least a portion of the porous insulation layer 14 is disposed in a bent region 16 of the electrode assembly 10, and the porous insulation layer 14 is disposed between the positive electrode plate 11 and the separator 13 or disposed between the negative electrode plate 12 and the separator 13.

It should be noted that the electrode assembly 10 is a component in which electrochemical reactions occur in the battery cell. One or more electrode assemblies 10 can be provided inside the battery cell.

In the electrode assembly 10, the positive electrode plate 11 is a continuous positive electrode plate 11, the negative electrode plate 12 is a continuous negative electrode plate 12, and the separator 13 is a continuous separator 13. Two continuous separators 13 are provided. Before winding, one of the continuous separators 13 is provided between the continuous positive electrode plate 11 and the continuous negative electrode plate 12, and the other continuous separator 13 is provided on a side of the continuous negative electrode plate 12 facing away from the continuous positive electrode plate 11, or provided on a side of the continuous positive electrode plate 11 facing away from the continuous negative electrode plate 12. Based on this, when the positive electrode plate 11, the separator 13, and the negative electrode plate 12 are wound and pre-pressed to form a roll-shaped structure, the two continuous separators 13 can separate the positive electrode plate 11 from the negative electrode plate 12 to prevent the positive electrode plate 11 and the negative electrode plate 12 from coming into direct contact, while such contact causes a short circuit. The separator 13 has a plurality of pores to allow active ions to pass through freely.

As shown in FIG. 5, the electrode assembly 10 of a roll-shaped structure has the body region 15 and the bent regions 16. The body region 15 is a relatively flat part located in the relative middle of the roll-shaped structure, and the bent region 16 is a bent part of the roll-shaped structure located at an end of the body region 15.

It should be further noted that in the electrode assembly 10, the porous insulation layer 14 may be disposed in one bent region 16, or the porous insulation layers 14 may be disposed in multiple bent regions 16.

In the bent region 16 provided with the porous insulation layer 14, one or more porous insulation layers 14 may be provided. The porous insulation layer 14 may be disposed between the positive electrode plate 11 at any circle and the separator 13 or disposed between the negative electrode plate 12 at any circle and the separator 13.

Specifically, the porous insulation layer 14 may be pre-disposed at a preset position of the continuous positive electrode plate 11 or the continuous negative electrode plate 12 before winding, so that when the positive electrode plate 11, the separator 13, and the negative electrode plate 12 are wound into a roll-shaped structure, the porous insulation layer 14 can be clamped between the bent part of the electrode plate and the separator 13. This can allow for convenient and quick installation of the porous insulation layer 14. The bent part of the electrode plate and the separator 13 can be used together to tightly clamp the porous insulation layer 14, thereby keeping the position and state of the porous insulation layer 14 stable.

It should be further noted that the porous insulation layer 14 has electrolyte resistance, so that the porous insulation layer 14 is indissolvable in the electrolyte 20.

The porous insulation layer 14 has a plurality of pores to allow active ions to pass through freely. Therefore, during the charging and discharging of the battery cell, active ions can freely penetrate the porous insulation layer 14 and the separator 13 to migrate between the positive electrode plate 11 and the negative electrode plate 12. This can effectively ensure that the disposition of the porous insulation layer 14 does not cause great impact on the charging and discharging process of the battery cell, thereby effectively ensuring the charging and discharging performance of the battery cell.

The porous insulation layer 14 is made of an insulation material, so the porous insulation layer 14 has relatively good insulation properties.

Therefore, when the porous insulation layer 14 is provided between the bent part of the positive electrode plate 11 at any circle and the separator 13, even if active ions are released from the bent part of the negative electrode plate 12 during the charging of the battery cell, and dendrites grow from a defective part of the bent part of the separator 13 as the time of using the battery cell increases, the porous insulation layer 14 provided between the positive electrode plate 11 at any circle and the separator 13 can insulate and block the grown dendrites. This prevents the dendrites from coming into direct contact with and conducting electricity to the positive electrode plate 11 and the negative electrode plate 12, and can even effectively delay the growth speed of the dendrites to some extent. This can effectively delay the occurrence of "dendrites directly causing an internal short circuit in the battery cell", and effectively delay the occurrence of "due to a short circuit, dendrites generating heat to melt the separator 13 around the dendrites, and thus a part of the positive electrode plate 11 and a part of the negative electrode plate 12 at the melted part of the separator 13 coming into direct contact to cause a short circuit", thereby correspondingly prolonging the service life of the battery cell, and correspondingly improving the safety of the battery cell.

When the porous insulation layer 14 is provided between the bent part of the negative electrode plate 12 at any circle and the separator 13, even when active ions are released from the bent part of the negative electrode plate 12 during the charging of the battery cell, the porous insulation layer 14 provided between the bent part of the negative electrode plate 12 at any circle and the separator 13 can shield and protect the bent part of the separator 13. This can effectively delay the occurrence of "precipitated active ions breaking through the porous insulation layer 14", effectively delay the occurrence of "dendrites directly causing an internal short circuit in the battery cell", and effectively delay the occurrence of "due to a short circuit, dendrites generating heat to melt the separator 13 around the dendrites, and thus a part of the positive electrode plate 11 and a part of the negative electrode plate 12 at the melted part of the separator 13 coming into direct contact to cause a short circuit", thereby correspondingly prolonging the service life of the battery cell, and correspondingly improving the safety of the battery cell.

In conclusion, in the battery cell provided in the embodiments of this application, the porous insulation layer 14 is disposed between the bent portion of the positive electrode plate 11 or the negative electrode plate 12 at any circle and the separator 13. Based on this, the pores of the porous insulation layer 14 can allow active ions to penetrate freely, so as to ensure that the porous insulation layer 14 does not have great impact on the charging and discharging process of the battery cell, thereby ensuring the charging and discharging performance of the battery cell. On this basis, the porous insulation layer 14 with insulation properties can also hinder the formation of dendrites. This effectively delays the occurrence of "dendrites directly causing an internal short circuit in the battery cell", and effectively delays the occurrence of "due to a short circuit, dendrites generating heat to melt the separator 13 around the dendrites, and thus a part of the positive electrode plate 11 and a part of the negative electrode plate 12 at the melted part of the separator 13 coming into direct contact to cause a short circuit", thereby correspondingly prolonging the service life of the battery cell, and correspondingly improving the safety of the battery cell.

In addition, in the battery cell provided in this application, during the winding and pre-pressing of the electrode assembly 10 and during the use of the battery cell, the porous insulation layer 14 disposed between the bent portion of the electrode plate and the separator 13 can further buffer the bending stress borne by the bent part of the electrode plate. This can effectively reduce the risk of a decrease in the active material caused by tearing of the bent part of the electrode plate, and effectively reduce the risk of aggravation of metal precipitation at the bent region 16 of the electrode assembly 10 caused by the decrease in the active material, effectively lowering the growth speed of dendrites, thereby correspondingly prolonging the service life of the battery cell, and correspondingly improving the safety of the battery cell.

Referring to FIGs. 5, 6, and 7, in some embodiments of this application, in the bent region 16, at least one porous insulation layer 14 is disposed on an inner side of the positive electrode plate 112 at an innermost circle.

It should be noted that in the electrode assembly 10, the porous insulation layer 14 may be disposed in one bent region 16, or the porous insulation layers 14 may be disposed in multiple bent regions 16. In the bent region 16 provided with the porous insulation layer 14, at least one porous insulation layer 14 is disposed on the inner side of the bent part of the positive electrode plate 112 at the innermost circle.

Since the curvature radius of electrode plate at the inner circle is smaller, the bent part of the positive electrode plate 112 at the innermost circle and the bent part of the negative electrode plate 122 at the innermost circle are subjected to larger bending stress and likely to undergo powder fall-off, and metal precipitation is likely to occur at the bent part of the positive electrode plate 112 at the innermost circle and the bent part of the negative electrode plate 122 at the innermost circle. The bent part of the positive electrode plate 112 at the innermost circle is located on the outer side of the bent part of the negative electrode plate 122 at the innermost circle, mainly, metal precipitation is likely to occur at the bent part of the negative electrode plate 122 at the innermost circle during the charging of the battery cell.

Therefore, in the above solution, when "metal precipitation occurs at a bent part of the negative electrode plate 122 at an innermost circle, and as time goes on, dendrites grow out from a defective part of a bent part of the separator 13", the porous insulation layer 14 disposed on the inner side of the bent part of the positive electrode plate 112 at the innermost circle can be used to insulate and block growing dendrites so as to prevent the dendrites from coming into direct contact with and conducting electricity to the positive electrode plate 11 and the negative electrode plate 12. This effectively delays the occurrence of "dendrites directly causing an internal short circuit in the battery cell" between the positive electrode plate 112 at the innermost circle and the negative electrode plate 122 at the innermost circle that are prone to metal precipitation, and effectively delays the occurrence of "due to a short circuit, dendrites generating heat to melt the separator 13 around the dendrites, and thus a part of the positive electrode plate 11 and a part of the negative electrode plate 12 at the melted part of the separator 13 coming into direct contact to cause a short circuit", thereby correspondingly prolonging the service life of the battery cell, and correspondingly improving the safety of the battery cell.

In addition, during the winding and pre-pressing of the electrode assembly 10 and during the use of the battery cell, the porous insulation layer 14 disposed on the inner side of the bent part of the positive electrode plate 112 at the innermost circle can be used to buffer the squeezing stress borne by the bent part of the positive electrode plate 112 at the innermost circle, so as to reduce the risk of tearing of the bent part of the positive electrode plate 112 at the innermost circle leading to a decrease in the active material; and even can buffer the tensile stress borne by the bent part of the negative electrode plate 122 at the innermost circle, so as to reduce the risk of tearing of the bent part of the negative electrode plate 122 at the innermost circle leading to a decrease in the active material. Therefore, the risk of aggravation of metal precipitation caused by the decrease in the active material can be effectively reduced, and the growth speed of dendrites between the positive electrode plate 112 at the innermost circle and the negative electrode plate 122 at the innermost circle can be effectively reduced, correspondingly prolonging the service life of the battery cell, and correspondingly improving the safety of the battery cell.

Referring to FIGs. 5, 6, and 7, in some embodiments of this application, in the bent region 16, at least one porous insulation layer 14 is disposed on an outer side of the positive electrode plate 112 at an innermost circle.

It should be noted that in the electrode assembly 10, the porous insulation layer 14 may be disposed in one bent region 16, or the porous insulation layers 14 may be disposed in multiple bent regions 16. In the bent region 16 provided with the porous insulation layer 14, at least one porous insulation layer 14 is disposed on the outer side of the bent part of the positive electrode plate 112 at the innermost circle.

In the above solution, the bent part of the positive electrode plate 112 at the innermost circle is subjected to a large bending stress, during the winding and pre-pressing of the electrode assembly 10 and during the use of the battery cell, the porous insulation layer 14 disposed on the outer side of the bent part of the positive electrode plate 112 at the innermost circle can be used to buffer the tensile stress borne by the bent part of the positive electrode plate 112 at the innermost circle, so as to reduce the risk of tearing of the bent part of the positive electrode plate 112 at the innermost circle leading to a decrease in the active material; and even can buffer the squeezing stress borne by the bent part of the negative electrode plate 123 at the second innermost circle, so as to reduce the risk of tearing of the bent part of the negative electrode plate 123 at the second innermost circle leading to a decrease in the active material. Therefore, the risk of aggravation of metal precipitation caused by the decrease in the active material can be effectively reduced, and the growth speed of dendrites between the positive electrode plate 112 at the innermost circle and the negative electrode plate 123 at the second innermost circle can be effectively reduced, correspondingly prolonging the service life of the battery cell, and correspondingly improving the safety of the battery cell.

The negative electrode plate 123 at the second innermost circle is a negative electrode plate 12 located on the outer side of the positive electrode plate 112 at the innermost circle. When the battery cell is being charged, the active ions provided by the outer surface of the positive electrode plate 112 at the innermost circle can freely pass through the porous insulation layer 14 and the separator 13 to move to the negative electrode plate 123 at the second innermost circle and be intercalated into the negative electrode active material of the negative electrode plate 123 at the second innermost circle.

Therefore, in the above solution, during the use of the battery cell, the porous insulation layer 14 disposed on the outer side of the bent part of the positive electrode plate 112 at the innermost circle can be used to insulate and block dendrites growing towards the porous insulation layer 14 so as to prevent the dendrites from coming into direct contact with and conducting electricity to the positive electrode plate 112 at the innermost circle and the negative electrode plate 123 at the second innermost circle. This can effectively delay the occurrence of "dendrites directly causing an internal short circuit in the battery cell" between the positive electrode plate 112 at the innermost circle and the negative electrode plate 123 at the second innermost circle, and effectively delay the occurrence of "due to a short circuit, dendrites generating heat to melt the separator 13 around the dendrites, and thus a part of the positive electrode plate 11 and a part of the negative electrode plate 12 at the melted part of the separator 13 coming into direct contact to cause a short circuit", thereby correspondingly prolonging the service life of the battery cell, and correspondingly improving the safety of the battery cell.

Referring to FIGs. 5, 6, and 7, in some embodiments of this application, the bent region 16 is provided with two porous insulation layers 14, one of the porous insulation layers 14 is disposed on an inner side of the positive electrode plate 112 at an innermost circle, and the other of the porous insulation layers 14 is disposed on an outer side of the positive electrode plate 112 at the innermost circle.

It should be noted that in the electrode assembly 10, the porous insulation layer 14 may be disposed in one bent region 16, or the porous insulation layers 14 may be disposed in multiple bent regions 16. In the bent region 16 provided with the porous insulation layer 14, one porous insulation layer 14 is disposed on each of the inner side and the outer side of the bent part of the positive electrode plate 112 at the innermost circle.

In the above solution, with the two porous insulation layers 14, the bent region 16 can effectively delay the risk of short circuits "between the positive electrode plate 112 at the innermost circle and the negative electrode plate 122 at the innermost circle" and "between the positive electrode plate 112 at the innermost circle and the negative electrode plate 123 at the second innermost circle" which are prone to metal precipitation and have relatively serious metal precipitation, and effectively alleviate the squeezing stress and tensile stress at the bent part of the positive electrode plate 112 at the innermost circle that bears relatively great bending stress and is prone to tearing defects, so as to reduce the risk of bending tearing, thereby effectively prolonging the service life of the battery cell, and effectively improving the safety of the battery cell. In the above solution, the number of the porous insulation layers 14 can also be reduced while the function of the porous insulation layer 14 is maximized, thereby ensuring and increasing the energy density of the electrode assembly 10 and the battery cell.

Referring to FIGs. 5, 6, and 7, in some embodiments of this application, the electrode assembly 10 has a body region 15 and bent regions 16 disposed at ends of the body region 15. The porous insulation layer 14 has a curved section 141 curvedly disposed in the bent region 16, and an extension section 142 connected to an end portion of the curved section 141 and disposed in the body region 15.

It should be noted that as shown in FIG. 5, the electrode assembly 10 of a roll-shaped structure has the body region 15 and the bent regions 16. The body region 15 is a relatively flat part located in the relative middle of the roll-shaped structure, and the bent region 16 is a bent part of the roll-shaped structure located at an end of the body region 15.

The porous insulation layer 14 has a curved section 141. The curved section 141 of the porous insulation layer 14 is disposed in the bent region 16, that is, at the inner side or outer side of the bent part of the electrode plate. The porous insulation layer 14 has one or two extension sections 142. When one extension section 142 is provided, the extension section 142 extends from one end of the curved section 141 and is provided in the body region 15. When two extension sections 142 are provided, the extension sections 142 respectively extend from opposite ends of the curved section 141 and are both disposed in the body region 15. The extension lengths of the two extension sections 142 may be the same or different.

Since the porous insulation layer 14 is pre-disposed at a preset position of the continuous positive electrode plate 11 or the continuous negative electrode plate 12 before winding, in the above solution, the area for disposing the porous insulation layer 14 can be correspondingly extended, and the porous insulation layer 14 has a relatively wide tolerance range in terms of its preset position on the continuous positive electrode plate 11 or the continuous negative electrode plate 12. This effectively ensures that when winding is performed to form the electrode assembly 10, the porous insulation layer 14 can have the curved section 141 clamped between the bent part of the electrode plate and the separator 13, and the extension section 142 that can be adaptively extended to the body region 15 according to the position tolerance, thereby effectively reducing the precision requirement for the preset position of the porous insulation layer 14 on the continuous positive electrode plate 11 or the continuous negative electrode plate 12, and effectively ensuring and improving the production yield rate of the electrode assembly 10.

In the above solution, the relative position and relative state of the porous insulation layer 14 can further be reliably maintained through the curved section 141 clamped between the bent part of the electrode plate and the separator 13 and the extension section 142 clamped between the flat portion (that is, part of the electrode plate corresponding to the body region 15) of the electrode plate and the separator 13, thereby effectively reducing the displacement risk of the porous insulation layer 14 during the use of the battery cell, and effectively ensuring that the porous insulation layer 14 can permanently, stably, and reliably function during the use of the battery cell.

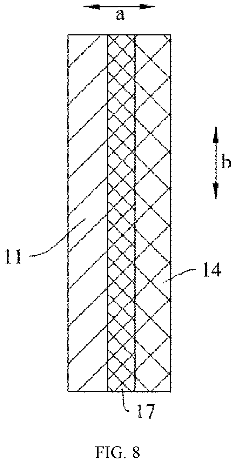

Referring to FIGs. 4, 5, and 8, in some embodiments of this application, the porous insulation layer 14 is adhered to the positive electrode plate 11 or the negative electrode plate 12 through a dissolvable adhesive 17.

It should be noted that before winding, the dissolvable adhesive 17 is disposed on one side of the porous insulation layer 14 along the thickness direction a thereof.

The dissolvable adhesive 17 may be applied on the entire region of the side of the porous insulation layer 14, that is, in the thickness direction a of the porous insulation layer 14, a projected area of the dissolvable adhesive 17 is equal to a projected area of the porous insulation layer 14.

The dissolvable adhesive 17 may alternatively be applied on partial region of the side of the porous insulation layer 14, that is, in the thickness direction a of the porous insulation layer 14, a projected area of the dissolvable adhesive 17 is smaller than a projected area of the porous insulation layer 14. In this case, the dissolvable adhesive 17 may be applied on any region of the side of the porous insulation layer 14, such as, four edges of the side of the porous insulation layer 14. This is not limited in the embodiments. In this case, a ratio of the projected area of the dissolvable adhesive 17 to the projected area of the porous insulation layer 14 in the thickness direction a of the porous insulation layer 14 may be any value, such as 50%. This is not limited in the embodiments.

In the above solution, before winding, the porous insulation layer 14 can be adhered to a preset position of the continuous positive electrode plate 11 or the continuous negative electrode plate 12 through a dissolvable adhesive 17, so as to maintain the preset position and preset state with respect to the electrode plate. In this way, during winding to form the electrode assembly 10, it can be ensured that the porous insulation layer 14 can be wound with the continuous positive electrode plate 11 or the continuous negative electrode plate 12 to the bent region 16, with a stable position and state with respect to the electrode plate. This can allow for convenient and quick installation of the porous insulation layer 14, effectively ensure and improve the position accuracy and utility of the porous insulation layer 14 in the formed electrode assembly 10, and effectively ensure and improve the production efficiency and production yield rate of the electrode assembly 10.

Referring to FIGs. 4, 5, and 8, in some embodiments of this application, the battery cell includes an electrolyte 20 for infiltrating the electrode assembly 10, and the electrolyte 20 contains the dissolvable adhesive 17.

It should be noted that the dissolvable adhesive 17 is easily dissolved in the electrolyte 20.

Before winding, the porous insulation layer 14 can be adhered to a preset position of the continuous positive electrode plate 11 or the continuous negative electrode plate 12 through a dissolvable adhesive 17, so as to maintain the preset position and preset state with respect to the electrode plate, and wind the porous insulation layer 14, the positive electrode plate 11, the separator 13, and the negative electrode plate 12 into the electrode assembly 10.

When the electrode assembly 10 and the electrolyte 20 are packed into the interior of the battery cell, at least a part of the dissolvable adhesive 17 adhered between the electrode plate and the porous insulation layer 14 is dissolved in the electrolyte 20 to reduce or even eliminate blockage to a corresponding region of the electrode plate and the porous insulation layer 14. Thi s makes it convenient for active ions to penetrate the porous insulation layer 14 freely and normally, and makes it convenient for the active ions to be intercalated into the electrode plate freely and normally, thereby effectively ensuring that the disposition of the porous insulation layer 14 does not have great impact on the charging and discharging process of the battery cell, and effectively ensuring the charging and discharging performance of the battery cell.

After the battery cell is formed, the dissolvable adhesive 17 adhered between the electrode plate and the porous insulation layer 14 can be completely dissolved in the electrolyte 20, or can be partially dissolved in the electrolyte 20 and partially remain between the electrode plate and the porous insulation layer 14. In the case of partially remaining between the electrode plate and the porous insulation layer 14, although the dissolvable adhesive 17 slightly blocks corresponding regions of the electrode plate and the porous insulation layer 14, no great impact is caused on the charging and discharging process of the battery cell. Therefore, the embodiments do not exclude the case that "the dissolvable adhesive 17 is partially dissolved in the electrolyte 20 and partially remains between the electrode plate and the porous insulation layer 14".

Referring to FIGs. 4, 5, and 8, in some embodiments of this application, the dissolvable adhesive 17 is a modified acrylic pressure-sensitive adhesive, and the electrolyte 20 contains modified acrylic resin.

It should be noted that the dissolvable adhesive 17 is made of a modified acrylic pressure-sensitive adhesive. The modified acrylic pressure-sensitive adhesive has the viscous liquid properties of the pressure-sensitive adhesive, and therefore, in the early stage, can be conveniently, quickly, and reliably applied on one side of the porous insulation layer 14 along the thickness direction a thereof, thereby helping to make an adhesive layer out of the dissolvable adhesive 17.

The modified acrylic pressure-sensitive adhesive also has the elastic solid properties of the pressure-sensitive adhesive. Before winding, only a little pressure needs to be applied to implement adherence between the dissolvable adhesive 17 and the electrode plate. Therefore, this can help to quickly and reliably adhere the porous insulation layer 14 at the preset position of the continuous positive electrode plate 11 or the continuous negative electrode plate 12 through the dissolvable adhesive 17.

The modified acrylic pressure-sensitive adhesive also has the easily degradable characteristics of the modified acrylic resin. When the electrode assembly 10 and the electrolyte 20 are packed into the interior of the battery cell, it can be quickly dissolved in the electrolyte 20 with barely no any residual adhesive left. Since the modified acrylic pressure-sensitive adhesive is dissolved in the electrolyte 20, the electrolyte 20 inside the battery cell contains the component of modified acrylic resin.

Therefore, in the above solution, the dissolvable adhesive 17 can have the viscous liquid properties of the pressure-sensitive adhesive, so that the dissolvable adhesive 17 can be applied on one side of the porous insulation layer 14 along the thickness direction a thereof, allowing for convenient, quick, and reliable formation. In addition, the dissolvable adhesive 17 can have the elastic solid properties of the pressure-sensitive adhesive, so that the dissolvable adhesive 17 can easily and reliably adhere the electrode plate with only a small pressure before winding, so that the porous insulation layer 14 can be conveniently and quickly installed at a preset position of the continuous positive electrode plate 11 or the continuous negative electrode plate 12. Furthermore, the dissolvable adhesive 17 can have the easy degradation characteristics of the modified acrylic resin, so that the dissolvable adhesive 17 can be quickly and easily dissolved in the electrolyte without leaving any residue when the electrode assembly 10 and the electrolyte 20 are packed into the interior of the battery cell.

Referring to FIGs. 4, 5, and 8, in some embodiments of this application, initial thickness of the dissolvable adhesive 17 is 2 µm to 8 µm.

It should be noted that the initial thickness of the dissolvable adhesive 17 refers to the size of the dissolvable adhesive 17 along the thickness direction a of the porous insulation layer 14 before winding.

In the above solution, the adhesion force between the dissolvable adhesive 17 and the electrode plate can be ensured before winding, thereby ensuring that the porous insulation layer 14 can be reliably and temporarily fixed to the electrode plate through the dissolvable adhesive 17. Furthermore, when the electrode assembly 10 and the electrolyte 20 are packed into the interior of the battery cell, it can be ensured that the dissolvable adhesive 17 can be quickly dissolved in the electrolyte 20. This can reduce the amount of residual dissolvable adhesive 17 on the porous insulation layer 14, thereby reducing the blocking effect of the dissolvable adhesive 17 on the pores of the porous insulation layer 14 and ensuring that the active ions can freely and normally penetrate the porous insulation layer 14. Therefore, the conductivity is ensured.

Referring to FIGs. 4 and 5, in some embodiments of this application, an absolute value of a difference between porosity of the porous insulation layer 14 and porosity of the separator 13 is less than or equal to 25%.

It should be noted that in this embodiment, the porosity can be determined by the gas displacement method. Specifically, reference can be made to GB/T 24586-2009. The porosity is determined through the following steps: the porous insulation layer 14 or the separator 13 is immersed in ethyl methyl carbonate (EMC) for cleaning, and then filled into a specific device, and the porosity is measured using the gas displacement method. The percentage of the volume of the pores in the porous insulation layer 14 to the total volume of the porous insulation layer 14 is the porosity of the porous insulation layer 14, and the percentage of the volume of the pores in the separator 13 to the total volume of the separator 13 is the porosity of the separator 13. Specifically, porosity = (V - V0)/V × 100%, where V0 is the true volume and V is the apparent volume.

It should also be noted that the porosity of the porous insulation layer 14 may be greater than the porosity of the separator 13, and the difference obtained by subtracting the porosity of the separator 13 from the porosity of the porous insulation layer 14 is less than or equal to 25%. For example, the porosity of the porous insulation layer 14 is 50%, the porosity of the separator 13 is 35%, and the difference between the porosity of the porous insulation layer 14 and the porosity of the separator 13 is 15%. For another example, the porosity of the porous insulation layer 14 is 40%, the porosity of the separator 13 is 35%, and the difference between the porosity of the porous insulation layer 14 and the porosity of the separator 13 is 5%.

The porosity of the porous insulation layer 14 can alternatively be smaller than the porosity of the separator 13, and the difference obtained by subtracting the porosity of the porous insulation layer 14 from the porosity of the separator 13 is less than or equal to 25%.

In the above solution, the porosity of the porous insulation layer 14 can be made not much different from the porosity of the separator 13. This helps active ions to freely and normally penetrate the porous insulation layer 14 and the separator 13, thereby effectively ensuring that the disposition of the porous insulation layer 14 does not cause great impact on the charging and discharging process of the battery cell, and effectively ensuring the charging and discharging performance of the battery cell.

Referring to FIGs. 4 and 5, in some embodiments of this application, an absolute value of a difference between porosity of the porous insulation layer 14 and porosity of the separator 13 is less than or equal to 10%.

In the above solution, the porosity of the porous insulation layer 14 can be made close to the porosity of the separator 13. This helps active ions to freely and normally penetrate the porous insulation layer 14 and the separator 13, thereby effectively ensuring that the disposition of the porous insulation layer 14 does not cause great impact on the charging and discharging process of the battery cell, and effectively ensuring and improving the charging and discharging performance of the battery cell.

Referring to FIGs. 4 and 5, in some embodiments of this application, the porous insulation layer 14 is a polyolefin separator, such as a polypropylene (PP) separator.

In the above solution, the porous insulation layer 14 can be made by using the polyolefin separator such as a polypropylene separator, so as to ensure that the porosity of the porous insulation layer 14 is similar to or even the same as the porosity of the separator 13. This can ensure that the active ions can freely and normally penetrate the porous insulation layer 14 and the separator 13, thereby effectively ensuring that the disposition of the porous insulation layer 14 does not cause great impact on the charging and discharging process of the battery cell, and effectively ensuring the charging and discharging performance of the battery cell.

Referring to FIGs. 4, 5, and 8, in some embodiments of this application, porosity of the porous insulation layer 14 is 40% to 50%.

It should be noted that theoretically, a larger porosity of the porous insulation layer 14 means better air permeability. However, as the porosity of the porous insulation layer 14 increases, when the same amount of the dissolvable adhesive 17 is applied on a side surface of the porous insulation layer 14, the amount of adhesive penetrating into the pores of the porous insulation layer 14 increases, and the amount of adhesive remaining on the surface of the porous insulation layer 14 decreases. As a result, the adhesion force of the dissolvable adhesive 17 decreases, thus the effect of fixing the porous insulation layer 14 to the electrode plate deteriorates, and thus the penetration rate and conductivity of the active ions deteriorate. Furthermore, when the electrode assembly 10 and the electrolyte 20 are packed into the interior of the battery cell, as the porosity of the porous insulation layer 14 increases, the amount of the dissolvable adhesive 17 remaining in the pores of the porous insulation layer 14 increases, resulting in the deterioration of the air permeability and the penetration rate of active ions of the porous insulation layer 14, thereby causing the deterioration of the conductivity.

Therefore, in the above solution, a moderate air permeability of the porous insulation layer 14 can be ensured, thereby ensuring that active ions can freely and normally penetrate the porous insulation layer 14. In addition, it can be ensured that a small amount of the adhesive penetrates into the holes of the porous insulation layer 14 when the dissolvable adhesive 17 is applied on a side of the porous insulation layer 14, while a large amount of the adhesive remains on the surface of the porous insulation layer 14. This can ensure the adhesion force of the dissolvable adhesive 17, thereby ensuring that the porous insulation layer 14 can be reliably and temporarily fastened to the electrode plate through the dissolvable adhesive 17. Furthermore, it can be ensured that a small amount of the adhesive is left in the pores of the porous insulation layer 14 when the dissolvable adhesive 17 is dissolved in the electrolyte 20, thereby reducing the blocking effect of the dissolvable adhesive 17 on the pores of the porous insulation layer 14, and ensuring that the active ions can freely and normally penetrate through the porous insulation layer 14. Therefore, the conductivity is ensured.

Referring to FIGs. 4, 5, and 8, in some embodiments of this application, pore sizes of the pores of the porous insulation layer 14 are A, and thickness of the porous insulation layer 14 is B, where 24 ≤ B/A ≤ 400.

It should be noted that the porous insulation layer 14 has a plurality of pores, and the pore sizes A of the pores of the porous insulation layer 14 refer to radial sizes of the pores of the porous insulation layer 14.

It can be understood that the pore sizes A of the pores of the porous insulation layer 14 may be exactly the same or different. The pore size may refer to a pore size when the pore sizes of the pores are the same, or a pore size of any pore when the pore sizes of the pores are not exactly the same.

It can be understood that the shape of each pore of the porous insulation layer 14 may be circular or other shapes such as rectangular. When the shape of the pore is circular, the pore size A of the pore refers to the diameter of the pore. When the shape of the pore is rectangular or other shapes, the pore size A of the pore refers to the size of the pore in the radial direction perpendicular to the central axis.

It should be further noted that the thickness B of the porous insulation layer 14 refers to the size of the porous insulation layer 14 in its thickness direction a.

B/A refers to the ratio of the thickness B of the porous insulation layer 14 to the pore size A of the porous insulation layer 14 when the units are the same.

When B/A is less than 24, the thickness B of the porous insulation layer 14 is too small, and the pore sizes A of the pores of the porous insulation layer 14 are too large. In this case, it is easier for dendrites to pierce the porous insulation layer 14 or pass through the porous insulation layer 14, with no blockage.

When B/A is greater than 400, the thickness B of the porous insulation layer 14 is too large, and the pore sizes A of the pores of the porous insulation layer 14 are too small. In this case, a migration path of active ions in the porous insulation layer 14 is too long. In addition, because the pore sizes A of the pores of the porous insulation layer 14 are too small, it is difficult for active ions to migrate, and it is easy to cause more active ions to precipitate.

Therefore, in the above solution, the thickness B of the porous insulation layer 14 and the pore sizes A of the pores of the porous insulation layer 14 can be both moderate. This ensures that the dendrites are not prone to pierce or pass through the porous insulation layer 14, thereby ensuring the blocking effect of the porous insulation layer 14 on the dendrites. In addition, this ensures that active ions are easy to migrate in the porous insulation layer 14 and the migration path is relatively short, thereby reducing the risk of precipitation caused by the difficulty in active ion migration. Thus, the service life of the battery cell can be effectively prolonged, and the safety of the battery cell can be effectively improved.

Referring to FIGs. 4, 5, and 8, in some embodiments of this application, thickness B of the porous insulation layer 14 is 12 µm to 20 µm.

It should be noted that theoretically, a larger thickness B of the porous insulation layer 14 means better insulation and blocking effects of the porous insulation layer 14 on dendrites. However, as the thickness B of the porous insulation layer 14 increases, the energy density of the battery cell decreases, and the penetration rate of active ions penetrating the porous insulation layer 14 deteriorates, thereby causing the conductivity to deteriorate, and even aggravating metal precipitation.

Therefore, in the above solution, the thickness B of the porous insulation layer 14 can be ensured to be moderate, so as to reduce the impact of the porous insulation layer 14 on the energy density of the battery cell and the penetration rate of active ions penetrating the porous insulation layer 14 while the relatively good insulating and blocking effect of the porous insulation layer 14 on the dendrites growing towards the porous insulation layer 14 can be ensured. As a result, the conductivity can be ensured, the charging and discharging performance of the battery cell can be ensured, the service life of the battery cell can be correspondingly prolonged, and the safety of the battery cell can be correspondingly improved.

Referring to FIGs. 4, 5, and 8, in some embodiments of this application, the pore sizes A of the pores of the porous insulation layer 14 are 0.05 µm to 0.5 µm.

It should be noted that theoretically, a larger pore size A of the porous insulation layer 14 means higher air permeability. However, as the pore sizes A of the pores of the porous insulation layer 14 increases, when the same amount of the dissolvable adhesive 17 is applied on a side surface of the porous insulation layer 14, the amount of adhesive penetrating into the pores of the porous insulation layer 14 increases, and the amount of adhesive remaining on the surface of the porous insulation layer 14 decreases. As a result, the adhesion force of the dissolvable adhesive 17 decreases, thus the effect of fixing the porous insulation layer 14 to the electrode plate deteriorates, and thus the penetration rate and conductivity of the active ions deteriorate. Furthermore, when the electrode assembly 10 and the electrolyte 20 are packed into the interior of the battery cell, as the pore sizes A of the pores of the porous insulation layer 14 increases, the amount of the dissolvable adhesive 17 remaining in the pores of the porous insulation layer 14 increases, resulting in the deterioration of the air permeability and the penetration rate of active ions of the porous insulation layer 14, thereby causing the deterioration of the conductivity. In addition, as the pore sizes A of the pores of the porous insulation layer 14 increase, during the use of the battery cell, the blocking effect of the porous insulation layer 14 on dendrites growing from a defective part of the separator 13 deteriorates, and there may even be a risk of dendrites growing from the pores of the porous insulation layer 14.

Therefore, in the above solution, a moderate air permeability of the porous insulation layer 14 can be ensured, thereby ensuring that active ions can freely and normally penetrate the pores of the porous insulation layer 14. In addition, it can be ensured that a small amount of the adhesive penetrates into the pores of the porous insulation layer 14 when the dissolvable adhesive 17 is applied on a side of the porous insulation layer 14, while a large amount of the adhesive remains on the surface of the porous insulation layer 14. This can ensure the adhesion force of the dissolvable adhesive 17, thereby ensuring that the porous insulation layer 14 can be reliably and temporarily fastened to the electrode plate through the dissolvable adhesive 17. Furthermore, it can be ensured that a small amount of the adhesive is left in the pores of the porous insulation layer 14 when the dissolvable adhesive 17 is dissolved in the electrolyte 20, thereby reducing the blocking effect of the dissolvable adhesive 17 on the pores of the porous insulation layer 14, and ensuring that the active ions can freely and normally penetrate through the pores of the porous insulation layer 14. Therefore, the conductivity is ensured. In addition, during the use of the battery cell, this can ensure the blocking effect of the porous insulation layer 14 on the dendrites growing from the defective part of the separator 13, and reduce the risk of dendrites growing from the pores of the porous insulation layer 14, thereby correspondingly prolonging the service life of the battery cell, and correspondingly improving the safety of the battery cell.

Referring to FIGs. 4, 5, and 8, in some embodiments of this application, tensile strength of the porous insulation layer 14 in the width direction b thereof is greater than or equal to 1000 kgf/cm².

It should be noted that the length direction a of the porous insulation layer 14 corresponds to the extension direction of the electrode plate, that is, a winding direction of the electrode plate. The width direction b of the porous insulation layer 14 corresponds to the width direction of the electrode plate. A tensile force is applied to the porous insulation layer 14 along the width direction b until the porous insulation layer 14 cannot withstand the tensile force and breaks, and the tensile strength of the porous insulation layer 14 in the width direction b thereof can be measured. The tensile strength of the porous insulation layer 14 in the width direction b thereof can reflect the capability of the porous insulation layer 14 to resist damage in the width direction b thereof when subjected to a tensile force.

Since the porous insulation layer 14 is disposed in the bent region 16, the porous insulation layer 14 is subjected to a tensile force to some extent during both the winding and pre-pressing of the electrode assembly 10 and during the use of the battery cell. Based on this, in the above solution, it can be ensured that the porous insulation layer 14 has sufficient tensile strength in its width direction, and the risk of the porous insulation layer 14 breaking or cracking under the action of tensile force can be effectively reduced. Therefore, this can ensure and improve the insulating and blocking effect of the porous insulation layer 14 on dendrites growing from the defective part of the separator 13, and effectively reduce the risk of the dendrites continuing to grow along a fracture or defective crack of the porous insulation layer 14, thereby correspondingly prolonging the service life of the battery cell, and correspondingly improving the safety of the battery cell.

It should be added that when the porous insulation layer 14 has sufficient tensile strength in its width direction b, the tensile strength of the porous insulation layer 14 in its extension direction can basically also meet the requirements. Therefore, this embodiment does not specifically limit the tensile strength of the porous insulation layer 14 in the extension direction thereof.

Referring to FIGs. 4, 5, and 8, in some embodiments of this application, elongation of the porous insulation layer 14 in the width direction b thereof is greater than or equal to 10%.

It should be noted that a tensile force is applied to the porous insulation layer 14 along the width direction b until the porous insulation layer 14 cannot withstand the tensile force and breaks, a percentage of the tensile deformation portion of the porous insulation layer 14 in the width direction b thereof relative to the original length is the elongation of the porous insulation layer 14 in the width direction b thereof.

Since the electrode assembly 10 may undergo swelling deformation during the use of the battery cell, the porous insulation layer 14 disposed in the bent region 16 of the electrode assembly 10 needs to have certain extension deformation performance. Therefore, in the above solution, it can be ensured that the porous insulation layer 14 has a sufficient elongation in its width direction b thereof, so as to ensure that the porous insulation layer 14 can be adaptively elongated and deformed with the electrode assembly 10, thereby ensuring that the effective range of the porous insulation layer 14 can cover the corresponding area of the electrode plate, and ensuring that the porous insulation layer 14 can reliably insulate and block dendrites growing from a defective part of the separator 13.

Referring to FIGs. 4, 5, and 8, in some embodiments of this application, shrinkage of the porous insulation layer 14 at 105°C is 0 to 3%.

It should be noted that the shrinkage of the porous insulation layer 14 at 105°C can be obtained by comparing "the size of the porous insulation layer 14 at 105°C" with "the size of the porous insulation layer 14 at room temperature" to obtain a shrinkage amount.

During the use of the battery cell, as the use time of the battery cell increases, the internal temperature of the battery cell gradually increases, causing the porous insulation layer 14 to shrink and deform. If there is too much shrinkage, the effective range of the porous insulation layer 14 may not be able to cover the corresponding area of the entire electrode plate. Based on this, in the above solution, during the use of the battery cell, it can be ensured that the porous insulation layer 14 shrinks with the internal temperature of the battery cell to a relatively small extent, thereby ensuring that the effective range of the porous insulation layer 14 can cover the corresponding area of the electrode plate, and ensuring that the porous insulation layer 14 can reliably insulate and block dendrites growing from a defective part of the separator 13.

Referring to FIG. 2, some embodiments of this application further provide a battery 1, where the battery 1 includes the battery cell provided in the embodiments of this application.

In the above solution, with the battery cell provided in the embodiments of this application used in the battery 1, the service life of the battery 1 can be ensured and prolonged, and the use safety of the battery 1 can be ensured and improved.

Referring to FIG. 1, some embodiments of this application further provide an electric apparatus, where the electric apparatus includes the battery 1 or battery cell provided in the embodiments of this application.

In the above solution, with the battery 1 or battery cell provided in the embodiments of this application used in the electric apparatus, the service life of the electric apparatus can be ensured and prolonged, and the use safety of the electric apparatus can be ensured and improved.

The foregoing descriptions are merely embodiments of this application, but are not intended to limit this application. Persons skilled in the art understand that this application may have various modifications and variations. Any modification, equivalent replacement, and improvement made without departing from the spirit and principle of this application shall fall within the protection scope of this application.

## Claims

1. A battery cell, wherein the battery cell comprises at least one electrode assembly, and the electrode assembly comprises a positive electrode plate, a negative electrode plate, a separator, and a porous insulation layer, wherein
the positive electrode plate, the separator, and the negative electrode plate are stacked and wound; and
at least a portion of the porous insulation layer is disposed in a bent region of the electrode assembly, and the porous insulation layer is disposed between the positive electrode plate and the separator or disposed between the negative electrode plate and the separator.

2. The battery cell according to claim 1, wherein in the bent region, at least one porous insulation layer is disposed on an inner side of the positive electrode plate at an innermost circle.

3. The battery cell according to claim 1, wherein in the bent region, at least one porous insulation layer is disposed on an outer side of the positive electrode plate at an innermost circle.

4. The battery cell according to claim 1, wherein two porous insulation layers are provided in the bent region, one of the porous insulation layers is disposed on an inner side of the positive electrode plate at an innermost circle, and the other of the porous insulation layers is disposed on an outer side of the positive electrode plate at an innermost circle.

5. The battery cell according to claim 1, wherein the electrode assembly has a body region and bent regions disposed at ends of the body region; and
the porous insulation layer has a curved section curvedly disposed in the bent region, and an extension section connected to an end of the curved section and disposed in the body region.

6. The battery cell according to claim 1, wherein the porous insulation layer is adhered to the positive electrode plate or the negative electrode plate through a dissolvable adhesive.

7. The battery cell according to claim 6, wherein the battery cell comprises an electrolyte for infiltrating the electrode as sembly, and the electrolyte contains the dissolvable adhesive.

8. The battery cell according to claim 6 or 7, wherein the dissolvable adhesive is a modified acrylic pressure-sensitive adhesive, and the electrolyte contains modified acrylic resin.

9. The battery cell according to any one of claims 1 to 8, wherein an absolute value of a difference between porosity of the porous insulation layer and porosity of the separator is less than or equal to 25%.

10. The battery cell according to claim 9, wherein the absolute value of the difference between the porosity of the porous insulation layer and the porosity of the separator is less than or equal to 10%.

11. The battery cell according to any one of claims 1 to 8, wherein the porous insulation layer is a polyolefin separator.

12. The battery cell according to any one of claims 1 to 8, wherein porosity of the porous insulation layer is 40% to 50%.

13. The battery cell according to any one of claims 1 to 8, wherein pore size of pores of the porous insulation layer is A, and thickness of the porous insulation layer is B, wherein 24 ≤ B/A ≤ 400.

14. The battery cell according to claim 13, wherein the thickness B of the porous insulation layer is 12 µm to 20 µm.

15. The battery cell according to claim 13, wherein the pore sizes A of the pores of the porous insulation layer are 0.05 µm to 0.5 µm.

16. The battery cell according to any one of claims 1 to 8, wherein tensile strength of the porous insulation layer in a width direction thereof is greater than or equal to 1000 kgf/cm².

17. The battery cell according to any one of claims 1 to 8, wherein elongation of the porous insulation layer in a width direction thereof is greater than or equal to 10%.

18. The battery cell according to any one of claims 1 to 8, wherein shrinkage of the porous insulation layer at 105°C is 0 to 3%.

19. A battery, wherein the battery comprises the battery cell according to any one of claims 1 to 18.

20. An electric apparatus, wherein the electric apparatus comprises the battery according to claim 19, or the battery cell according to any one of claims 1 to 18.
